# EUROPÄISCHE PATENTSCHRIFT

(11) **EP 2 278 515 B1**
(45) Veröffentlichungstag und Bekanntmachung des Hinweises auf die Patenterteilung: **12.09.2018**
(21) Anmeldenummer: 10007242.0
(22) Anmeldetag: 14.07.2010
(51) Int. Cl.: G06F 21/00

(54) **Verfahren zum Aktivieren einer Laufzeitumgebung einer Mikroprozessoreinheit**
Method for activating a runtime environment of a microprocessor unit
Procédé d'activation d'un environnement de temps d'exécution d'une unité de microprocesseur

(30) Priorität: 16.07.2009 DE 102009033359; 14.04.2010 DE 102010014882
(43) Veröffentlichungstag der Anmeldung: 26.01.2011
(73) Patentinhaber: Giesecke+Devrient Mobile Security GmbH, 81677 München (DE)
(72) Erfinder: Spitz, Stephan, Dr., 85757 Karlsfeld (DE); Sterzinger, Hermann, Dr., 85598 Baldham (DE)

(56) Entgegenhaltungen:
- EP-A1- 1 873 729
- WO-A2-99/33033
- DE-T2- 69 829 642
- US-A1- 2003 196 089
- "eCard-API-Framework eCard-Interface", BSI - TECHNISCHE RICHTLINIE, BUNDESAMT FÜR SICHERHEIT IN DER INFORMATIONSTECHNIK, Nr. BSI TR-03112-2 Version 1.0, 3. März 2008 (2008-03-03), Seiten 1-70, XP007914824,
- "Technische Richtlinie TR-03127 Architektur Elektronischer Personalausweis", TECHNISCHE RICHTLINIE TR-03127, BUNDESAMT FÜR SICHERHEIT IN DER INFORMATIONSTECHNIK, DE, Nr. Version 0.5, 17. April 2009 (2009-04-17), Seiten 1-37, XP007914804,
- "EAC-PKI'n für den elektronischen Personalausweis Rahmenkonzept für den Aufbau und den Betrieb von Document Verifiern", BSI TECHNISCHE RICHTLINIE TR-03128, BUNDESAMT FÜR SICHERHEIT IN DER INFORMATIONSTECHNIK, DE, Nr. Version 0.70, 3. Juli 2003 (2003-07-03), Seiten 1-54, XP007914805,

## Beschreibung

Die Erfindung betrifft ein Verfahren zum Aktivieren einer Laufzeitumgebung einer Mikroprozessoreinheit, insbesondere in einem mobilen Endgerät.

Laufzeitumgebungen sind aus dem Stand der Technik bekannt und ermöglichen eine gegen Angriffe geschützte Ausführung von Programmen mit einer Mikroprozessoreinheit. Unter einer Mikroprozessoreinheit ist dabei die Gesamtheit der zur Programmausführung verwendeten Hardware zu verstehen, insbesondere der eigentliche Mikroprozessor sowie entsprechende flüchtige und nicht-flüchtige Speicher, welche bei der Programmausführung zur Ablage von Daten verwendet werden.

Für die Inbetriebnahme und Aktivierung der Laufzeitumgebung ist die Bereitstellung eines sog. Trustcenters erforderlich. Da der Betrieb eines Trustcenters aufwändig und mit hohen Kosten verbunden ist, ist es aus Sicht eines Herausgebers eines die Laufzeitumgebung enthaltenden Geräts, beispielsweise des mobilen Endgeräts, wünschenswert, die Aktivierung der Laufzeitumgebung an eine dritte Partei abgeben zu können. Die Weitergabe der Aktivierungsmöglichkeit der Laufzeitumgebung umfasst jedoch auch die Weitergabe eines zur Aktivierung der Laufzeitumgebung notwendigen Aktivierungsschlüssels an die dritte Partei. Für den Herausgeber der Laufzeitumgebung besteht deshalb die Gefahr, dass keine Kontrolle über die Anzahl der durchgeführten Aktivierungen möglich ist. Dies ist jedoch dann von Nachteil, wenn die Aktivierung der Laufzeitumgebung einen kostenpflichtigen Vorgang darstellt.

Aus der DE 698 29 642 T2 ist eine Chipkarte mit einem Zähler für eine Anzahl vorheriger Zugriffe auf eine Funktion, beispielsweise einen Computer, zur Zugriffsberechtigung zu dieser Funktion bekannt. Hierbei wird zur Überprüfung der Zugangsberechtigung der Zählerstand des Zählers verwendet. Aus der Patentschrift US 2003/196089 ist ein Verfahren zur Verteilung von Schlüsseln auf einer Smart Card bekannt, die einen Zähler für die Schlüsselaktivierung beinhaltet.

Aus der Technische Richtlinie TR-03127 Architektur Elektronischer Personalausweis ist eine Signaturkarte bekannt, die einen Schlüssel zur Aktivierung einer Laufzeitumgebung aufweist, die von einer Zertifizierungsstelle herausgegeben wird.

Aus Aus dem Zertifizierungsdokument debisZERT.02037.TE.03.2001 der debis Systemhaus GmbH über "STARCOS SPK2.3 with Digital Signature Application StarCert (Unlimited Signature Generation Configuration)", ist eine Signaturkarte bekannt, welche über einen Zähler verfügt. In diesem Dokument ist offenbart, dass die Anzahl der ohne erneute Authentisierung generierbaren digitalen Signaturen begrenzt ist. Es ist insbesondere eine Begrenzung der Anzahl durch Überwachung der seit einer erfolgreichen Authentisierung abgelaufenen Zeit oder der Anzahl der erzeugten digitalen Signaturen vorgesehen. Ist eine vorgegebene Zeit abgelaufen oder vorgegebene Anzahl von digitalen Signaturen erzeugt worden, so wird eine erneute Authentisierung erzwungen, bevor eine weitere digitale Signatur erzeugt werden kann.

Aus dem Zertifizierungsdokument TUVIT.09385.TU.09.2004 der TÜV Informationstechnik GmbH über eine "Signaturerstellungseinheit ZKA-Signaturkarte, Version 5.02 der Gemplus-mids GmbH" ist ebenfalls eine Signaturkarte bekannt, welche über einen Zähler verfügt. In diesem Dokument ist beschrieben, dass die Anzahl der Signaturen, die mit einem Signaturschlüssel erzeugt werden können, durch einen Zähler auf einen vorgegebenen Wert begrenzbar ist. Der Zähler wird bei jeder Anwendung des Signaturschlüssels um 1 erniedrigt. Die Anwendung des Signaturschlüssels wird permanent gesperrt, wenn der Bedienungszähler den Wert 0 erreicht. Danach können, auch nach erfolgreicher Authentifizierung mit einer Signatur-Pin, keine Signaturen mehr erzeugt werden.

Es ist Aufgabe der Erfindung, ein Verfahren zum Aktivieren einer Laufzeitumgebung zur Ausführung eines Programms anzugeben, mit dem eine Aktivierung der Laufzeitumgebung steuerbar, insbesondere an eine dritte Partei delegierbar ist, wobei die Kontrolle über die Aktivierung der Laufzeitumgebung beim Herausgeber der Laufzeitumgebung verbleiben kann.

Diese Aufgabe wird gelöst durch ein Verfahren mit den Merkmalen des Patentanspruches 1. Vorteilhafte Ausgestaltungen ergeben sich aus den abhängigen Patentansprüchen.

Die Erfindung schafft ein Verfahren zum Aktivieren einer Laufzeitumgebung einer Mikroprozessoreinheit, insbesondere in einem mobilen Endgerät, bei dem ein tragbarer Datenträger, insbesondere eine Signaturkarte, mit einem privaten Schlüssel zur Aktivierung der Laufzeitumgebung verwendet wird, wobei die Verwendung des privaten Schlüssels zur Aktivierung der Laufzeitumgebung durch den Datenträger für eine maximal zulässige Höchstzahl von Verschlüsselungen zugelassen wird.

Der Vorteil des erfindungsgemäßen Vorgehens besteht darin, dass der Herausgeber eines die Laufzeitumgebung enthaltenden Geräts, beispielsweise eines mobilen Endgeräts, das Aktivieren der Laufzeitumgebung an die dritte Partei, beispielsweise eine Bank, überträgt, wobei der Herausgeber der Laufzeitumgebung jedoch die Kontrolle darüber behält, wie oft die Laufzeitumgebung aktiviert werden kann.

Hierdurch kann der aufwändige Betrieb eines Trustcenters an Dritte delegiert werden, ohne dass dadurch die Kontrolle über die Anzahl der durchgeführten Aktivierungen der Laufzeitumgebungen abgegeben werden braucht.

Insbesondere kann mit dem erfindungsgemäßen Verfahren auf einfache Weise eine AAA (Authentication-Authorisation-Accounting)-Funktionalität bereitgestellt werden. Dadurch wird die Zusammenarbeit mit sog. Trusted Service Managern (TSM) ermöglicht, ohne die Kontrolle über die Anzahl der kostenpflichtigen Aktivierungen zu verlieren.

Gemäß einer zweckmäßigen Ausgestaltung wird als privater Schlüssel ein Signaturschlüssel verwendet, wobei die Verschlüsselung eine Signaturoperation umfasst.

Es ist weiterhin vorgesehen, dass der private Schlüssel nicht mehr verwendet werden kann, sobald die zulässige Höchstzahl von Verschlüsselungen erreicht ist. Dies kann beispielsweise durch das Vorsehen eines Zählers in dem tragbaren Datenträger realisiert sein, der von einem Ausgangswert ausgehend bei jeder Anwendung des privaten Schlüssels den Zähler um 1 erniedrigt. Die Anwendung des Signaturschlüssels wird dann permanent gesperrt, wenn der Zähler z.B. den Wert 0 erreicht. Alternativ kann auch ausgehend vom Wert 0 bei jeder Anwendung des Signaturschlüssels der Zähler um 1 erhöht werden. Die Anwendung des Signaturschlüssels wird dann permanent gesperrt, wenn der Zähler den vorgegebenen Höchstwert erreicht hat. Danach ist es nicht mehr möglich, den privaten Schlüssel zur Aktivierung der Laufzeitumgebung zu verwenden.

Gemäß einer Erfindung wird der tragbare Datenträger an eine dritte Partei zur Aktivierung der Laufzeitumgebung ausgegeben, welche nicht Herausgeber der Laufzeitumgebung ist. Insbesondere ist die dritte Partei Betreiber einer Zertifizierungsstelle. Beispielsweise kann die dritte Partei durch eine Bank repräsentiert sein.

Bei einer zweckmäßigen Ausgestaltung ist vorgesehen, dass der Herausgeber der Laufzeitumgebung eine Wurzelzertifizierungsstelle und zumindest eine Zwischenzertifizierungsstelle betreibt, wobei der Herausgeber der Laufzeitumgebung den tragbaren Datenträger mit dem privaten Schlüssel der jeweiligen Zwischenzertifizierungsstelle der dritten Partei zur Verfügung stellt. Für jede dritte Partei, welche eine Aktivierung einer Laufzeitumgebung einer Mikroprozessoreinheit in einem Endgerät vornimmt, ist zweckmäßigerweise eine jeweilige Zwischenzertifizierungsstelle vorzusehen.

In einer weiteren Ausgestaltung ist vorgesehen, dass der private Schlüssel, welcher zur Aktivierung der Laufzeitumgebung verwendet wird, Teil einer Public-Key-Infrastruktur (PKI) ist.

Weiterhin ist vorgesehen, dass durch den tragbaren Datenträger die Laufzeitumgebung in einer ARM-Trustzone (R) in dem mobilen Endgerät aktiviert wird.

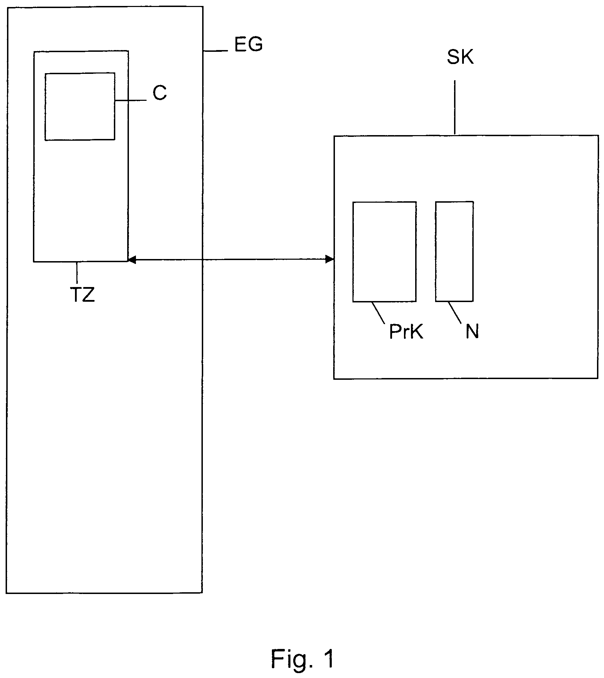

Ein Ausführungsbeispiel der Erfindung wird nachfolgend anhand der beigefügten Fig. 1 detailliert beschrieben. Diese Figur zeigt in schematischer Darstellung die zur Durchführung des erfindungsgemäßen Verfahrens notwendigen Komponenten, mit welchen die Aktivierung einer Laufzeitumgebung einer Mikroprozessoreinheit durch eine dritte Partei möglich ist.

Die zu aktivierende Laufzeitumgebung ist beispielsweise eine ARM-Trustzone (R) in einem Mobilfunkendgerät. Die ARM-Trustzone (R) stellt eine bekannte Technologie dar, mit der in einer Mikroprozessoreinheit, beispielsweise des Mobilfunkendgeräts, ein geschützter Bereich generiert wird, der als gesicherte Laufzeitumgebung zur Durchführung von Applikationen verwendet wird. Zu diesem Zweck ist die ARM-Trustzone (R) in einer Hardware-Plattform eines mobilen Endgeräts, z.B. des erwähnten Mobilfunkendgeräts, implementiert. Die Laufzeitumgebung stellt dabei eine Softwareschicht zwischen der Applikations- und der Betriebssystem-Schicht der Mikroprozessoreinheit dar. Bevor eine Anwendung durch eine Laufzeitumgebung ausgeführt werden kann, ist die Aktivierung und Konfiguration der Laufzeitumgebung erforderlich.

Unter dem Aktivieren der Laufzeitumgebung wird beispielsweise die Schaffung eines Containers gemäß der Global Platform-Spezifikation verstanden. Die Aktivierung eines solchen Containers ist hierbei nur durch eine autorisierte Partei möglich. Ein Container in der Trustzone ist zunächst unter der Kontrolle eines sog. Trusted Service Providers (TSP) und kann dann erst zu einer dritten Partei durch den Transfer von Schlüsseldaten übertragen werden.

Ein Container repräsentiert einen isolierten Speicherbereich, der verschiedene Applikationen (sog. Trustlets) eines Applikations-Providers, beispielsweise einer Bank, umfasst. Dem Bereitsteller der Applikation (Provider) wird die volle Kontrolle über seinen Container erst nach dessen Aktivierung erteilt. Der Container kann deshalb als eine Art virtuelle Smartcard bezeichnet werden. Der Bereitsteller der Applikation ist dann verantwortlich für das sog. Lifecycle-Management seines Containers und die Applikationen in dem Container. Zu diesem Zweck wird der Container mit seinen Schlüsseln initialisiert. Die Aktivierung des Containers entspricht daher der Schaffung einer sog. "Issuer/Privileged Security Domain" in der Global Platform Card-Terminologie. Die Aktivierung eines Containers wird typischerweise anhand eines eindeutigen Kennzeichners für das Endgerät, das dem Trusted Service Provider (TSP) bekannt ist, überwacht.

In einer Mikroprozessoreinheit können parallel mehrere Laufzeitumgebungen bzw. Container vorgesehen sein. Jedes Aktivierungsereignis erzeugt seine eigene Laufzeitumgebung bzw. Container, wobei jede Laufzeitumgebung mit einer Bezahl-Funktionalität versehen ist. Jede Laufzeitumgebung bzw. jeder Container wird als "virtuelle Smartcard" gemäß der Global Platform Card-Spezifikation 2.2 angesehen.

Fig. 1 zeigt in einer schematischen Darstellung die zur Durchführung des erfindungsgemäßen Verfahrens grundsätzlich notwendigen Komponenten. Um die Aktivierung einer Laufzeitumgebung C einer Mikroprozessoreinheit TZ in einem mobilen Endgerät EG durchführen zu können, ist ein tragbarer Datenträger SK, welcher insbesondere eine Signaturkarte darstellt, vorgesehen. In dem tragbaren Datenträger SK ist ein privater Schlüssel PrK vorgesehen, welcher zur Aktivierung der Laufzeitumgebung C verwendet wird. Dabei ist innerhalb des tragbaren Datenträgers ein Zähler N vorgesehen, welcher beispielsweise bei jeder Aktivierung der Laufzeitumgebung, ausgehend von einem Startwert, um 1 verringert wird. Sobald der Zähler N, ausgehend von dem vorgegebenen Wert, den Wert 0 erreicht hat, kann der Signaturschlüssel PrK nicht mehr verwendet werden, da die zulässige Höchstzahl von Verschlüsselungen erreicht ist. Der vorgegebene Wert des Zählers N stellt eine maximal zulässige Höchstzahl für die Verwendung des privaten Schlüssels PrK zur Aktivierung der Laufzeitumgebung C durch den Datenträger SK dar.

Der private Schlüssel PrK, welcher insbesondere ein Signaturschlüssel ist, ist Teil einer Public-Key-Infrastruktur. Der Signaturschlüssel PrK wird zur Durchführung einer Signaturoperation verwendet, mit welcher die Aktivierung der Laufzeitumgebung C durchgeführt wird.

Durch die Verwendung einer Signaturchipkarte SK mit einer Höchstzahl zulässiger Signaturen zum Aktivieren einer Laufzeitumgebung, kann die Aktivierung der Laufzeitumgebung durch eine dritte Partei durchgeführt werden, welche nicht Herausgeber der Laufzeitumgebung C ist. Bei der dritten Partei handelt es sich beispielsweise um eine Bank, welche Betreiber einer Zertifizierungsstelle ist. Durch die maximal zulässige Höchstzahl von Verschlüsselungen, kann die Anzahl der durchgeführten Aktivierungen kontrolliert werden. Hierdurch kann der aufwändige Betrieb eines Trustcenters an die dritte Partei delegiert werden, wobei für den Herausgeber der Laufzeitumgebung die Kontrolle über die Anzahl der durchgeführten Aktivierungen nicht verloren geht. Es ist auf einfache Weise die Bereitstellung einer AAA (Authentication-Authorisation-Accounting)-Funktionalität möglich, wodurch insbesondere die Zusammenarbeit mit sog. Trusted Service Managern (TSM), wie diese z.B. von den Firmen Venyon, Cassis oder Firstdata angeboten werden, ermöglicht wird. Dabei bleibt jederzeit die Kontrolle über die Anzahl der kostenpflichtigen Aktivierungen einer Laufzeitumgebung bzw. Containers erhalten.

Es ist insbesondere zweckmäßig, wenn der Herausgeber der Laufzeitumgebung eine Wurzelzertifizierungsstelle (Root CA) betreibt sowie verschiedene Zwischenzertifizierungsstellen (sog. Intermediate CAs) für unterschiedliche dritte Parteien. Diesen dritten Parteien wird dann ein jeweiliger privater Schlüssel der Zwischenzertifizierungsstellen über die Signaturkarte zur Verfügung gestellt.

### Positionsliste

- C: Laufzeitumgebung
- N: Zähler
- EG: Endgerät
- PrK: privater Schlüssel (Signatur)
- SK: Datenträger (Signaturkarte)
- TZ: Mikroprozessoreinheit (Trust Zone)

## Patentansprüche

1. Verfahren zum Aktivieren einer Laufzeitumgebung (C) einer Mikroprozessoreinheit (TZ), insbesondere in einem mobilen Endgerät (EG), mittels eines tragbaren Datenträgers (SK), insbesondere einer Signaturkarte, wobei der tragbare Datenträger (SK) einen privaten Schlüssel (PrK) zur Aktivierung der Laufzeitumgebung (C) aufweist und wobei der private Schlüssel (PrK) zur Aktivierung der Laufzeitumgebung (C) durch den Datenträger (SK) für eine maximal zulässige Höchstzahl von Verschlüsselungen zugelassen ist und der private Schlüssel (PrK) nicht mehr verwendet werden kann, sobald die zulässige Höchstzahl von Verschlüsselungen erreicht ist, wobei der tragbare Datenträger (SK) an eine dritte Partei zur Aktivierung der Laufzeitumgebung (C) ausgegeben wird, welche nicht Herausgeber der Laufzeitumgebung (C) ist,
wobei die dritte Partei Betreiber einer Zertifizierungsstelle ist, und wobei der Herausgeber der Laufzeitumgebung (C) eine Wurzelzertifizierungsstelle und zumindest eine Zwischenzertifizierungsstelle betreibt, wobei der Herausgeber der Laufzeitumgebung (C) den tragbaren Datenträger (SK) mit dem privaten Schlüssel (PrK) der jeweiligen Zwischenzertifizierungsstelle der dritten Partei zur Verfügung stellt.

2. Verfahren nach Anspruch 1, bei dem als privater Schlüssel (PrK) ein Signaturschlüssel verwendet wird und die Verschlüsselung eine Signaturoperation umfasst.

3. Verfahren nach einem der vorherigen Ansprüche, bei dem der private Schlüssel (PrK) Teil einer Public-Key-Infrastruktur ist.

4. Verfahren nach einem der vorherigen Ansprüche, bei dem durch den tragbaren Datenträger (SK) die Laufzeitumgebung (C) in einer ARM Trust Zone (R) in einem mobilen Endgerät (EG) aktiviert wird.

5. System bestehend aus einem tragbaren Datenträger (SK), insbesondere eine Signaturkarte, und einer Mikroprozessoreinheit (TZ), in der eine Laufzeitumgebung (C) nach einem der vorhergehenden Ansprüche aktiviert wird, wobei der Datenträger (SK) einen Zähler (N) aufweist und der Zähler (N) mit jeder Aktivierung der Laufzeitumgebung (C) inkrementiert wird und wobei der Datenträger (SK) nicht mehr zum Aktivieren der Laufzeitumgebung (C) verwendbar ist, sobald der Zähler (N) eine maximal zulässige Höchstzahl von Aktivierungen der Laufzeitumgebung (C) erreicht hat,
wobei die dritte Partei Betreiber einer Zertifizierungsstelle ist, und wobei der Herausgeber der Laufzeitumgebung (C) eine Wurzelzertifizierungsstelle und zumindest eine Zwischenzertifizierungsstelle betreibt, wobei der Herausgeber der Laufzeitumgebung (C) den tragbaren Datenträger (SK) mit dem privaten Schlüssel (PrK) der jeweiligen Zwischenzertifizierungsstelle der dritten Partei zur Verfügung stellt..

## Claims

1. A method for activating a runtime environment (C) of a microprocessor unit (TZ), in particular in a mobile terminal (EG), by means of a portable data carrier (SK), in particular a signature card, wherein the portable data carrier (SK) has a private key (PrK) for activating the runtime environment (C) and wherein the private key (PrK) for activating the runtime environment (C) by the data carrier (SK) is admitted for a maximally admissible maximum number of encryptions and the private key (PrK) cannot be employed any more once the admissible maximum number of encryptions has been reached, wherein the portable data carrier (SK) is issued to a third party for activating the runtime environment (C), said party not being the issuer of the runtime environment (C),
wherein said third party is an operator of a certification entity, and wherein the issuer of the runtime environment (C) operates a root certification entity and at least one intermediate certification entity, wherein the issuer of the runtime environment (C) makes available the portable data carrier (SK) with the private key (PrK) of the respective intermediate certification entity to the third party.

2. The method according to claim 1, wherein as the private key (PrK) a signature key is employed and the encryption includes a signature operation.

3. The method according to any of the preceding claims, wherein the private key (PrK) forms part of a public key infrastructure.

4. The method according to any of the preceding claims, wherein the runtime environment (C) is activated by the portable data carrier (SK) in an ARM Trust Zone (R) in a mobile terminal (EG).

5. A system consisting of a portable data carrier (SK), in particular a signature card, and a microprocessor unit (TZ), in which a runtime environment (C) is activated in accordance with any of the preceding claims, wherein the data carrier (SK) has a counter (N) and the counter (N) is incremented upon each activation of the runtime environment (C) and wherein the data carrier (SK) cannot be employed any more for activating the runtime environment (C) once the counter (N) has reached a maximally admissible maximum number of activations of the runtime environment (C),
wherein the third party is an operator of a certification entity, and wherein the issuer of the runtime environment (C) operates a root certification entity and at least one intermediate certification entity, wherein the issuer of the runtime environment (C) makes available the portable data carrier (SK) with the private key (PrK) of the respective intermediate certification entity to the third party.

## Revendications

1. Procédé d'activation d'un environnement d'exécution (C) d'une unité à microprocesseur (TZ), en particulier dans un terminal mobile (EG), au moyen d'un support de données portable (SK), en particulier d'une carte de signature, cependant que le support de données portable (SK) comporte une clé privée (PrK) pour l'activation de l'environnement d'exécution (C) et cependant que la clé privée (PrK), pour l'activation de l'environnement d'exécution (C) par le support de données (SK), est admise pour un nombre maximal au maximum admissible de cryptages et que la clé privée (PrK) ne peut plus être utilisée dès que le nombre maximal admissible de cryptages est atteint, cependant que le support de données portable (SK) est, pour l'activation de l'environnement d'exécution (C), délivré à un tiers qui n'est pas émetteur de l'environnement d'exécution (C),
cependant que le tiers est un exploitant d'un organisme de certification, et cependant que l'émetteur de l'environnement d'exécution (C) exploite un organisme de certification racine et au moins un organisme de certification intermédiaire, cependant que l'émetteur de l'environnement d'exécution (C) met le support de données portable (SK) avec la clé privée (PrK) de l'organisme respectif de certification intermédiaire à la disposition du tiers.

2. Procédé selon la revendication 1, dans lequel, en tant que clé privée (PrK), une clé de signature est utilisée et le cryptage comprend une opération de signature.

3. Procédé selon une des revendications précédentes, dans lequel la clé privée (PrK) est une partie d'une infrastructure à clé publique.

4. Procédé selon une des revendications précédentes, dans lequel, par le support de données portable (SK), l'environnement d'exécution (C) est activé dans une trust zone ARM (R) dans un terminal mobile (EG).

5. Système consistant en un support de données portable (SK), en particulier en une carte de signature, et en une unité à microprocesseur (TZ) dans laquelle un environnement d'exécution (C) selon une des revendications précédentes est activé, cependant que le support de données (SK) comporte un compteur (N) et que le compteur (N), à chaque activation de l'environnement d'exécution (C), est incrémenté, et cependant que le support de données (SK) n'est plus utilisable pour l'activation de l'environnement d'exécution (C) dès que le compteur (N) a atteint un nombre maximal admissible d'activations de l'environnement d'exécution (C),
cependant que le tiers est un exploitant d'un organisme de certification, et cependant que l'émetteur de l'environnement d'exécution (C) exploite un organisme de certification racine et au moins un organisme de certification intermédiaire, cependant que l'émetteur de l'environnement d'exécution (C) met le support de données portable (SK) avec la clé privée (PrK) de l'organisme respectif de certification intermédiaire à la disposition du tiers.
